# EUROPEAN PATENT APPLICATION

(11) **EP 1 911 636 A1**
(43) Date of publication of application: **16.04.2008**
(21) Application number: 06021175.2
(22) Date of filing: 09.10.2006
(51) Int. Cl.: B60R 21/26

(54) **Airbag inflator with redirected flow diffuser shield**

(71) Applicant: KEY SAFETY SYSTEMS, INC., Sterling Heights, MI 48314 (US)
(72) Inventor: Kippschull, Bernd, 64546 Mörfelden (DE)
(74) Representative: Gislon, Gabriele

(57) **Abstract**

An airbag inflator (100, 100A) has a diffuser (21) with an outer shield (5) for absorbing hot projectile impacts and redirecting the gas flow. The airbag inflator can contain stored gas, a pyrotechnic charge or a pyrotechnic charge in combination with a stored gas for inflating an airbag. The inflator has a sealing member (17), which prevents gas from exiting the pressure vessel. In the event of a vehicle crash the sealing integrity of the sealing member (17) is destroyed. Inflation gasses flow into a diffuser (21) and then exit the inflator in a direction oriented radially with respect to a longitudinal axis of the housing (10) impacting an outer shield (5) that redirects the flow of inflation gas back toward the external surfaces of the inflator housing (10) prior to inflating an airbag.

## Description

This invention relates to a device for shielding the gas flow from an airbag inflator having a radial exhaust of inflation gas from the inflator.

Various technologies require the rapid release of pressurized fluid from a pressure vessel. Examples of such technologies include inflatable vehicle occupant restraints, fire suppression systems, and emergency air containers.

In the field of vehicle occupant inflatable restraints, the cold gas inflator inflates a vehicle airbag by releasing stored gas. The stored gas generally comprises one or more inert gases such as argon or helium. In a crash the stored gas exits the cold gas inflator and flows into an airbag to inflate the airbag. Since cold gas inflators release stored gas they do not have the problems associated with other inflators such as toxic gas and hot inflation gas.

Cold gas inflators are typically used in inflating curtain, thorax, head and thorax airbags, knee bags and a variety of other suitable applications. Curtain airbags are mounted in the roof of a vehicle and when inflated protect the vehicle occupant's head. Thorax airbags are mounted lower than curtain airbags and are generally mounted in vehicle seats. Knee bags are generally stored under the instrument panel.

Cold gas inflators have a discharge opening, and the stored gas must travel through this opening to exit the pressure vessel. Typically, the discharge opening has a blocking member, which prevents the stored gas from passing through the discharge opening and escaping the pressure vessel. During a crash, an opening device must quickly remove or rupture a sealing member to allow the airbag to be rapidly deployed. It is paramount that the opening device be reliable so that the actuation of an opening device always yields an unblocked discharge opening. Along with being reliable, it is desirable for the opening device to be made from as few parts as possible. An example of an opening device operates by removing a support for a sealing element. Once the sealing element loses its support, the sealing element ceases to block the discharge opening and the stored gas is able to flow through the discharge opening. This type of opening device is known from US 6 247 725 B1. Another type of opening device works by generating a shock wave. The inflator in WO 01/42047 A2 uses a shock wave to open a burst disc, which causes the stored gas to escape from the gas vessel. The inflator in US 5 022 674 A also uses a shock wave to break the disk permitting inflation gas to exit the pressure vessel.

A particularly reliable cold gas inflator 200 disclosed in US 6 629 703 B2 is shown in FIG. 6. The cold gas inflator 200 includes an opening device 3 for unblocking the discharge opening. The discharge opening is blocked with a sealing member 17, typically a burst disk. The burst disk 17 has a dome-shape when the pressure vessel is filled with stored gas 11. The opening device is an igniter 3 with a pyrotechnic substance and a nozzle 8, which both retains the igniter 3 to the igniter end cap 4 and focuses the output energy of the igniter to enhance the reliable opening of the burst disk 17. Actuation of the igniter 3 results in the generation of a shock wave due to the explosion and rapid burning of a small amount of pyrotechnic material, which has enough energy to rupture the burst disk 17. Typically 3 grams or less of pyrotechnic material is sufficient to create the shock wave needed to burst the rupture disk. After the burst disk 17 has been ruptured, the stored gas 11 is able to leave the inflator 200 by flowing through the discharge openings 14, 19 and out through the vent openings 22. The cold gas inflator is provided with an orifice plate 18 to restrict the flow of stored gas through the discharge opening 19.

Fragments from the igniter and some portions of the burst disk are thrust into diffuser 21 by the rapid escape of the gasses that are stored at pressures of up to about 630 kg/cm². As the hot particle fragments leave the diffuser 21 exiting through a plurality of vent openings 22 that are oriented radially with respect to a longitudinal axis of the housing 10. The hot particle fragments impinge directly onto the fabric of the airbag (not shown) surrounding the diffuser. In some cases small holes burnt in the fabric of the airbag create a local weakness that initiates small tears causing some of the inflation gasses to be lost to the ambient atmosphere. This problem is not desirable and should be avoided, but the benefits of the reliability achieved by using these pyrotechnic type igniters means that a solution is needed to slow or prevent these microscopic "meteor like" burning fragments and shards from damaging the airbag fabric. The present invention according to the characterizing portion of claim 1 and the dependent claims provides a simple cost effective solution to this problem that works in combination with a cold gas inflator or a hybrid inflator or a pyrotechnic inflator wherein the inflation gasses discharge from the inflator in radial directions with respect to a longitudinal axis of the inflator housing.
FIG. 1 is a perspective view of a cold gas inflator of the present invention.
FIG. 2 is an exploded view of the cold gas inflator of FIG. 1.
FIG. 3 is a cross sectional plan view of the cold gas inflator of FIG. 1.
FIG. 4 is an enlarged cross sectional view of the diffuser portion of the cold gas inflator of FIG. 1.
FIG. 5 is an enlarged cross sectional view of an alternative inflator according to the present invention.
FIG. 6 is an enlarged cross sectional plan view of a prior art cold gas inflator with a radial flow diffuser similar to US 6 629 703.

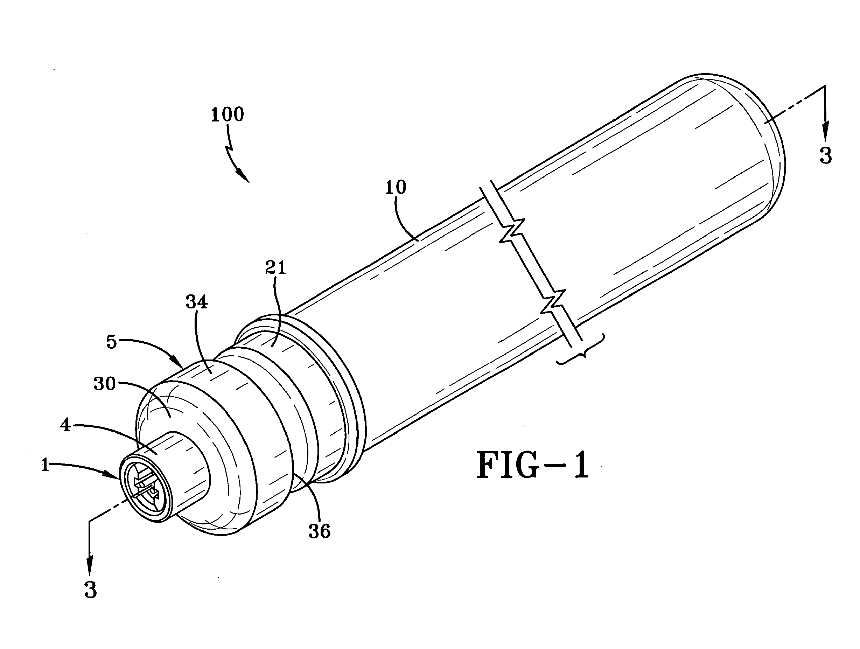

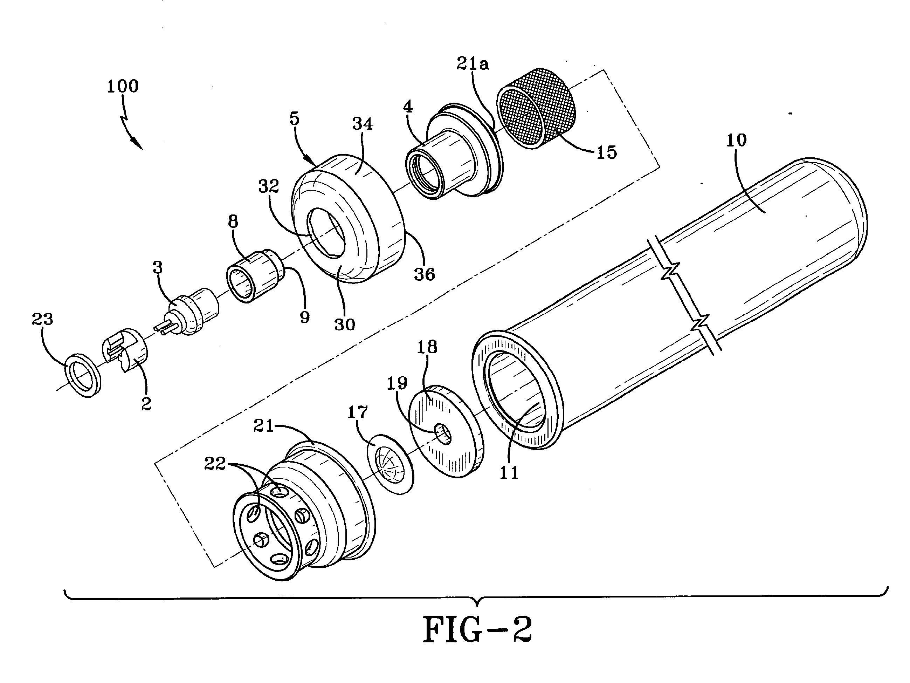

FIGs. 1 through 4 show an exemplary airbag inflator 100 of the present invention for use in an automotive safety restraint system. The exemplary device is a cold gas airbag inflator; however, the present invention applies to other types of airbag inflators such as hybrid inflators having both stored gas and a pyrotechnic charge or a pyrotechnic type inflator without stored gas. The inventive concept works well with any of these inflators that discharge inflation gasses in a direction oriented radially with respect to a longitudinal axis of the inflator. The following description while emphasizing the preferred embodiment cold gas inflator is not limited to that type of airbag inflator exclusively, but rather is intended to include these other types of airbag inflators as well. The cold gas inflator 100 has a housing 10 that acts as a pressure vessel containing stored gas 11, which is released from the inflator during a vehicle crash to inflate an airbag (not shown). The housing 10 has a generally cylindrical or tubular shape. It is understood that an inflator housing having a spherical or disk like shape may also be used in the practice of the present invention. The housing 10 has a circular cross section. The housing 10 may be made of stainless steel, low carbon steel, or any other suitable material that has sufficient strength and extremely low permeability to the gas.

The ideal characteristics for the stored gas 11 are that the gas is inert, is not highly temperature sensitive, and has a high inflation speed. According to the present invention, the storage pressure of the inert gas is about 630 kg/cm² at 23 °C. It is possible to design a cold gas inflator that operates properly under a pressure lower or higher using either an inert or diatomic gas. The stored gas can include one or more gases, which include argon, neon, xenon, helium and nitrogen. Preferably, the gas is pure helium or a mixture of argon and helium. The preferred percentages for an argon/helium system include a gas mixture having from 5-100% helium with the remainder being argon.

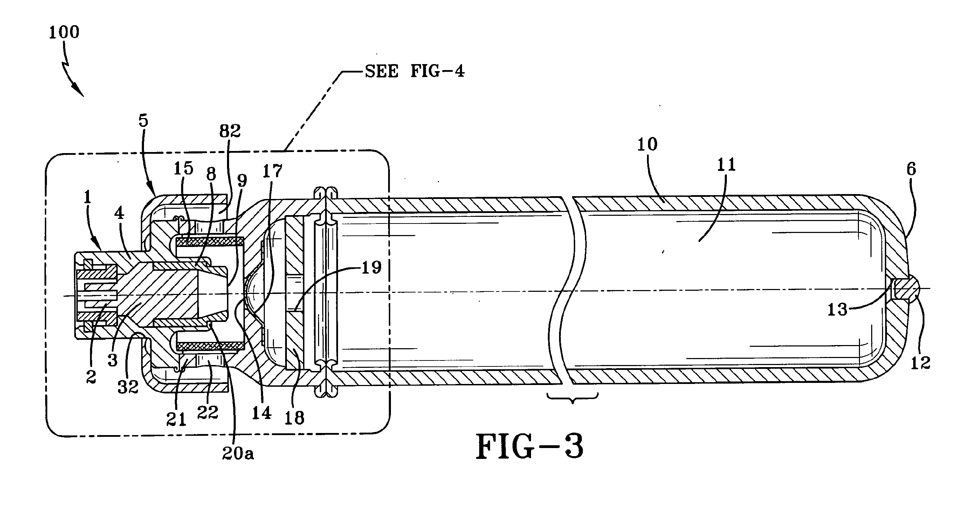

In FIG. 3 the housing 10 receives stored gas 11 through a gas fill port 13 in a first end 6 of the housing. The gas fill port is sealed by a plug 12 made from carbon steel to prevent gas from escaping after the housing 10 has been filled to the desired pressure. It is preferred that the plug is secured to the gas fill port 13 by a resistance weld, but one skilled in the art realizes that other types of welding could be utilized to fuse the plug 12 to the housing 10.

The gas fill port 13 is located at the first end 6 of the housing 10, and an opening device 1 for unblocking the discharge opening 14 by rupturing a sealing member, such as a burst disk 17 is located on the other end of the housing. In FIG. 3 the opening device is attached to a generally cylindrical diffuser 21, which is attached to the housing 10 by a circumferential weld, specifically a friction weld, where a butt joint is formed as shown. The diffuser may be made of stainless steel, low carbon steel, or any other material having sufficient strength.

When the burst disk 17 is attached to the diffuser 21, it can have a flat shape, but the burst disk flexes towards the opening device 1 when the stored gas 11 applies pressure against the burst disk resulting in the burst disk having a dome shaped configuration. It is recognized by those skilled in the art that a rigid diffuser may also be used in conjunction with a hydro-forming process which bulges the disc in the direction of the opening device to amount greater than seen during gas fill. In doing so the gas fill rate may be increased without risk of pre-mature failure of the burst disk.

The burst disk 17 seals the discharge opening 14 and prevents the stored gas 11 from escaping from the housing 10. The burst disk may be made from stainless steel, nickel-chromium alloys such as INCONEL, nickel-copper alloys such as MONEL or any other suitable material. The hardness of the burst disk should be between "half hard" and "full hard" to minimize burst disk thickness. Hardness is the degree to which a metal will resist cutting, abrasion, penetration, bending and stretching and the indicated hardness will differ with the specific apparatus and technique of measuring. The preferred thickness of the burst disk is in the range of 0.203 mm to 0.254 mm. The burst disk is attached to the diffuser by a YAG Laser but could be attached by other welding techniques.

The opening device 1 comprises an electrically actuated igniter 3, an end cap 4, and optionally an igniter nozzle 8. The opening device 1 is positioned so that the longitudinal axis of the opening device is essentially coincident with a longitudinal axis of the housing 10. The igniter 3 communicates with a central processing unit (not shown), which in turn communicates with a crash sensor means (not shown). The electric firing pins 2 are insulated from one another and connected by a bridge wire. (not shown) The bridge wire is preferably embedded in one or more layers of pyrotechnic compositions designed to generate a shockwave to rupture the burst disk 17. An example of a suitable pyrotechnic composition or pyrotechnic substance is zirconium potassium perchlorate or ZPP; however, one skilled in the art realizes that other pyrotechnic substance could be used in the present invention. Examples of igniter suppliers include SDI and EMS-Patvag. The preferred embodiment has a bridge wire igniter, but a semiconductor bridge igniter or a smart igniter can also be used.

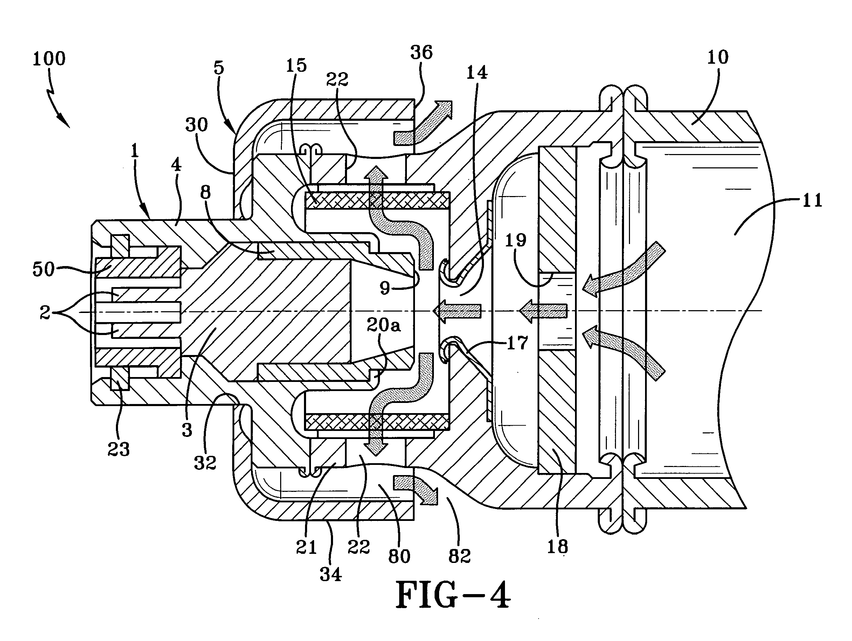

An end cap 4 houses the igniter 3. The igniter can be connected to the end cap 4 by crimping at 20a as shown in FIG. 4 or by welding, screwing, or other suitable attachment means. The end cap 4 is attached to the diffuser 21 by welding, but one skilled in the art knows other methods of attachment.

The opening device 1 may have an igniter nozzle 8 for directing the output energy from the ignition of the pyrotechnic substance towards the burst disk 17. In FIG. 1, the nozzle is tapered inward in the direction of the burst disk 17. Without the igniter nozzle 8, the igniter would still rupture the burst disk 17 but will need to be loaded with a larger quantity of the pyrotechnic substance. It is also possible to utilize an igniter with reinforced walls, which would eliminate the need for a nozzle 8. These reinforcement walls would act in a similar fashion to the nozzle 8 by focusing the output energy in the direction of the burst disc 17.

In FIG. 4 the nozzle 8 is attached to the end cap 4 by crimping, but other methods of attachment are suitable such as press fit or welding. The nozzle is preferably made from standard carbon steel and has an opening 9 in the range of 2 mm to 8 mm in diameter that is smaller than the discharge opening 14. A stabilizer block 50 secures the igniter in place and is in turn secured to the enc cap 4 by a lock ring 23.

Upon the detection of a crash or a sudden deceleration, the pyrotechnic substance in the igniter is ignited by a bridgewire, and the explosion of the pyrotechnic substance generates a shockwave that impacts the burst disk 17 destroys the sealing integrity of the burst disk as a sealing member. In order for the burst disk 17 to rupture, the opening device 1 is disposed less than 8.0 mm away from a center of the fully domed burst disk. After the burst disk 17 is opened, stored gas from the housing 10 escapes through the vent openings 22 in directions that are oriented radially with respect to the longitudinal axis of the housing 10. The cold gas inflator has a screen 15 to capture fragments from the ruptured burst disk so that these fragments will not enter the airbag.

There are several methods of controlling the gas flow rate. One method of controlling the gas flow rate is to increase or decrease the diameter of the vent openings 22. Another method is to increase or decrease the diameter of the discharge opening 14. Lastly, a regulating orifice plate 18 can be installed in the pressure vessel to control the rate of gas discharge. In FIG. 4 the orifice plate 19 is mounted spaced slightly apart from the burst disk 17. The stored gas 11 flows through the throttle orifice 19 of the orifice plate 18. The presence of the orifice plate 18 affects the flow rate of the stored gas 11 through the discharge opening 14 since the discharge opening 14 has a greater area than the throttle orifice 19. A first quantity of stored gas 11, which is the stored gas 11 between the discharge opening 14 and the orifice plate 18, flows through the discharge opening 14. On the other hand, a second quantity of stored gas 11, which is stored between the orifice plate 18 and the first end 6 of the inflator, must flow through both the throttle orifice 19 and the discharge opening 14. It is preferred that the orifice plate 18 be disposed in a position closer to the second end 7 of the pressure vessel than the first end 6 to limit the amount of unthrottled gas to an energy level sufficient to complete the rupturing of the burst disc.

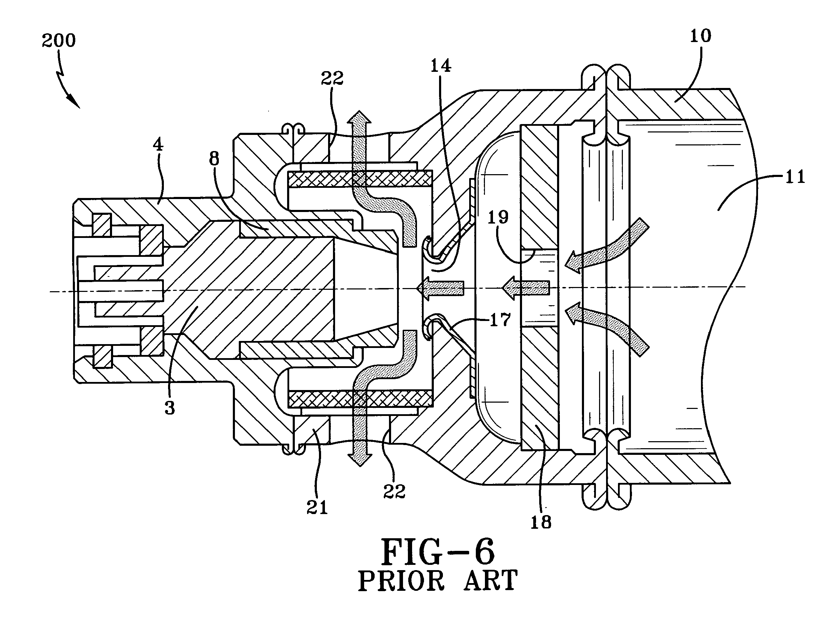

In FIG. 6 the prior art diffuser of inflator 200 has the gasses escape under pressure through the vent openings 22 that are oriented radially with respect to the longitudinal axis of the housing 10. The vent openings are oriented around the diffuser in a uniform circumferential spacing to create a thrust neutral exhausting of the gasses as they fill the airbag. In the present invention the cold gas inflator 100 the thrust neutral exhausting of gasses is maintained even as the gasses impinge a cup shaped outer shield 5. The cup shaped outer shield 5 is securely welded to the end cap 4.

Upon assembly a hole 32 in the closed end plate 30 of the cup shaped outer shield 5 receives the end cap 4. The end plate 30 abuts against the end cap 4 and is welded to the end cap 4. A cylindrical portion 34 of the outer shield 5 extends from the end plate 30 completely encircling the vent opening 22 and extending axially beyond the vent openings 22 toward the inflator housing. The cylindrical portion 34 of the cup shaped end cap has a larger inside diameter than the diameter of the external surface at the diffuser near the vent opening 22 and therefore creates an gas flow passage 80 that extends axially with respect to the longitudinal axis of the housing 10. The cylindrical portion 34 of the cup shaped end cap extends longitudinally back toward the first end 6 of the inflator housing 10. The end 36 of the cylindrical portion of the cup shaped end cap stops short of the enlarged portion of the diffuser creating a 360 degree circumferentially extending radial gap 82 between the end 36 of the cylindrical portion of the cup shaped end cap and the diffuser. Preferably the gap 82 and the axial passage 80 have an opening area larger than the total area of the combined vent openings 22 of the diffuser. In this way the flow of gas is not restricted, but is redirected. The cup shaped outer shield 5 not only redirects the gas flow, but actually causes the gas flow to reverse direction prior to exhausting out of the gap 82 in a thrust neutral flow pattern. The force of the escaping gasses impinging the closed end plate 30 of the cup shaped outer shield cancels out some of the relatively small longitudinal thrust forces created as the gas escapes through the throttle orifice 19.

More importantly as gas under pressure exhausts out of an orifice the flow chills rapidly as a phenomenon commonly known as the Thompson Joule effect occurs causing a rapid drop in temperature. This phenomenon actually can create frost or icing of the surfaces on the diffuser and outer shield. Accordingly at the instant of gas discharge the cup shaped outer shield 5 will force any small hot particles that get past the screen 15 inside the diffuser to impact the inner surfaces of the outer shield 5 which will absorb a large portion of the heat energy as well as redirect the kinetic energy longitudinally along the housing. As these tiny particles have a greater mass than the exhaust gasses 11 they tend to move along the housing and further cool prior to exiting at the gap 82. In practice it has been found that the use of the cup shaped outer shield 5 virtually eliminates the phenomena of burnt holes and tears in the airbag.

The outer shield 5 is preferably made of steel and has a sufficient thickness and mass to absorb the forces of the gasses while cooling and redirecting the minute particles that passed through the screen without adversely diminishing the airbag fill rate. Additional filtration would have altered the flow rate and thus the time to fill the airbag that is not desirable or as controllable.

The cup shaped outer shield 5 has an outside diameter substantially equal to or slightly less than the diameter of the housing 10 of the inflator to facilitate mounting and attachment.

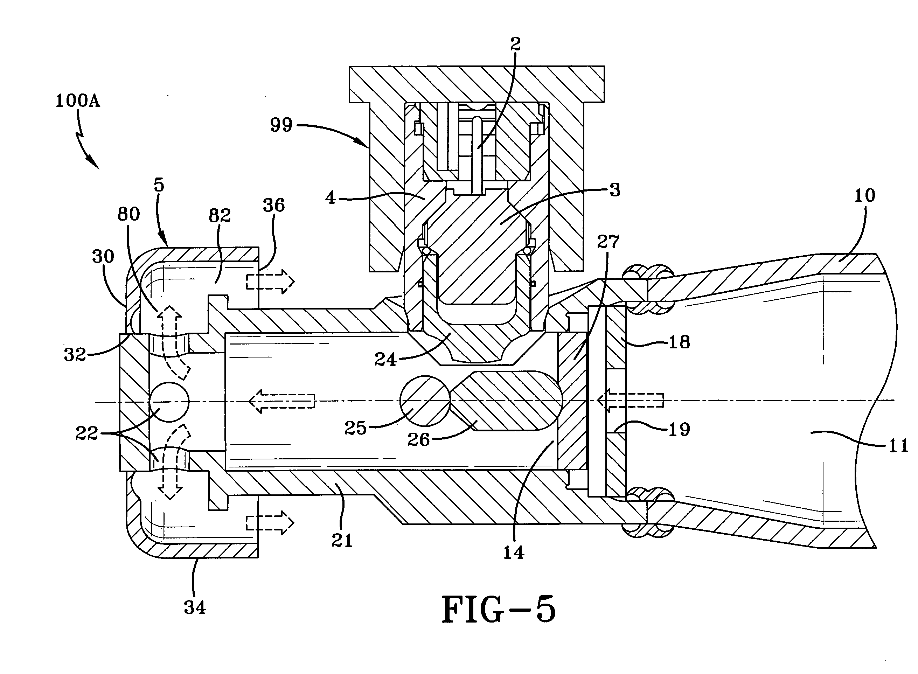

In FIG. 5 an alternative embodiment of an airbag inflator 100A is shown wherein the igniter 3 is mounted on the side of the diffuser 21 and the outer shield 5 is welded to the axial end of the diffuser so that the same gas flow pathways 80, 82 are created which provide the beneficial protection of an airbag (not shown) when the sealing integrity of the sealing member 17 is destroyed when the igniter 3 is activated. The igniter 3 is contained in a connector closure 99 that is connected to the electric firing pins 2 and an end cap 4. Upon actuation the igniter 3 produces a blast that moves a hammer 24 striking a knock out rod 26 that is held in place by the hold down pin 25 causing the sealing member 27 to move allowing the gas 11 to pass through the opening 19 and then through the vent openings 22 near the axial end of the inflator 100A striking the outer shield 5. The vent openings 22 are oriented in radial directions with respect to a longitudinal axis of the housing 10. The outer shield 5 is beneficially used in any inflator type device having a radial discharge of the inflation gasses wherein hot shards or burning particulate can be first deflected by or impacted into the inner surfaces of the shield to absorb both the heat and the kinetic energy in an effort to protect the airbag cushion from burn holes.

## Claims

1. An airbag inflator (100, 100A) comprising: a housing (10) for storing a gas (11) or a pyrotechnic charge, or for storing both a gas (11) and a pyrotechnic charge; a diffuser (21) attached to an end of the housing (10), the diffuser (21) having a plurality of vent openings (22) therethrough, the vent openings oriented radially with respect to a longitudinal axis of the housing (10); **characterized by** a cup shaped outer shield (5) attached to the inflator external of the diffuser (21) and encircling the plurality of radially oriented vent openings (22) and an open face of the cup extending toward the housing (10).

2. An airbag inflator (100, 100A) according to claim 1 further comprising a sealing member (17) for sealing a discharge opening (19); and a device (3) for destroying the sealing integrity of the sealing member (17)

3. An airbag inflator (100, 100A) according to claim 1 or 2 wherein the outer shield (5) has a closed end attached to an end of the inflator and a cylindrical portion extending from the end plate.

4. An airbag inflator (100, 100A) according to claim 3 wherein the cylindrical portion of the outer shield (5) encircles a portion of the diffuser (21) and has an inside surface spaced from the encircled portion of the diffuser (21) to form an axially extending passage.

5. An airbag inflator (100, 100A) according to any of claims 1 - 4 wherein the outer shield (5) redirects the gas flow from a direction oriented radially with respect to a longitudinal axis of the housing (10) to axially with respect to a longitudinal axis of the housing (10) within the cylindrical portion prior to exiting the open end of the outer shield (5).

6. An airbag inflator (100, 100A) according to any of claims 1 - 5 wherein the open end of the outer shield (5) is axially spaced from an enlarged diameter portion of the diffuser (21) to form a gap passage 360 degrees circumferentially around the inflator.

7. An airbag inflator (100, 100A) according to any of claims 1 - 6 wherein the outer shield (5) has an outside diameter equal to or less than the diameter of the housing (10).

8. An airbag inflator (100, 100A) according to any of claims 1 - 7, wherein the inflator is a cold gas type inflator.

9. An airbag inflator (100, 100A) according to any of claims 1 - 7, wherein the inflator is a hybrid type inflator having both a stored gas and a pyrotechnic charge for generation of the inflation gas.

10. An airbag inflator (100, 100A) according to any of claims 1 - 7, wherein the inflator is a pyrotechnic charged type inflator without stored gas (11), the pyrotechnic charge generates the inflation gasses for filling an airbag.

11. An airbag inflator (100, 100A) according to any of claims 1 - 10, wherein the housing (10) has a tubular shape.

12. An airbag inflator (100, 100A) according to any of claims 1 - 10, wherein the housing (10) has a disk shape.
